# EUROPEAN PATENT SPECIFICATION

(11) **EP 1 434 374 B1**
(45) Date of publication and mention of the grant of the patent: **03.05.2006**
(21) Application number: 02425789.1
(22) Date of filing: 23.12.2002
(51) Int. Cl.: H04J 14/02

(54) **Optical add-drop multiplexer for optical metropolitan networks**
Optischer add/drop-Multiplexer für optische Metropolitan-Kommunikationsnetzwerke
Multipléxeur optique à insertion/extraction pour réseaux métropolitains optiques

(43) Date of publication of application: 30.06.2004
(73) Proprietor: SIEMENS AKTIENGESELLSCHAFT, 80333 München (DE)
(72) Inventor: Crognale, Claudio, 66034 Lanciano (IT); Mosca, Giovanni, 67100 L'Aquila (IT)

(56) References cited:
- EP-A- 1 087 561
- WO-A-01/15484
- WO-A-98/18231
- US-A- 5 612 805
- US-B1- 6 233 074
- "Configurable Add/Drop Multiplexing" JDS UNIPHASE - APPLICATION NOTE, June 2000 (2000-06), XP002241486
- JOSHUA ISRAELSOHN: "Switching the light fantastic" EDN, 26 October 2000 (2000-10-26), pages 113-122, XP002241487

## Description

### FIELD OF THE INVENTION

The present invention relates to the optical metropolitan networks. In particular it refers to a device for the optical filtering, transit and the extraction of a plurality of optical signals, each one of them associated to an optical-carrier with a different wavelength, and for the insertion of a further plurality of optical signals. Along the text, the terms "wavelength" and "carrier" will be equivalently used.

The ever-increasing traffic (several Gbit/sec) also in the optical metropolitan networks emphasises the problem how to manage many optical channels transmitted through a single optical fibre by using the WDM technique (Wavelengths Division Multiplexing).
In particular, it's of remarkable importance the development of new techniques which allow to add/drop a variable and configurable number of optical channels, without the utilisation of any Electro-optical conversion, being this operation very expensive and not transparent to the "bit-rate" of the signals to manage.
An Optical Add-Drop Multiplexer (OADM) is a device able to manage, insert and/or extract a number of working WDM signals, without Electro-Optical conversion.

An OADM, by definition, must be able to manage a fixed number of working WDM signals, operating at 2.5 Gbit/s, 10 and 40 Gbit/s, transmitted on a 1550 nm carrier, with 0.4nm and 0.8nm wavelength spacing, according to ITU-T G.692 Recommendation .

Besides the optical transparency, other important requirements are its flexibility, in terms of scaling and reconfigurability, and the quality of the transmission performances.

### Background art

The structure of an OADM node, based on a "split&select" architecture, has until now found several different solutions.

In a first architecture, (see, for example, the module COADM-SN4-200 developed by JDS Uniphase and the.WO 99/60740) the OADM is made up of the following fundamental elements:
- An optical WDM demultiplexer/multiplexer couple, that works on assigned, fixed and contiguous wavelengths. These devices are, generally, AWG (Arrayed Waveguide) demultiplexer/multiplexer, characterized by good performances in terms of cost, cross talk, insertion losses and shape of the channel filters. Some component's manufacturers for WDM applications, offer demultiplexing or multiplexing modules integrating an extraction or insertion capability within the ITU-T grating with 1.6 nm spacing (for example, see the Santec TWDM-700/ 700AD product, "tuneable WDM module").
- 1x2 or 2x2 optical switches (as in the patent mentioned above), based on different technologies (micro-mechanics, planar wave guides, SOA and so on) which allow, through the application of a voltage control signal, the extraction or insertion of different optical channels.
   In this OADM, the optical de-multiplexer, at the input of the equipment, separates and, generally, filters the signals with different, assigned wavelength. Successively, the signals are separately sent to the switches and then subjected to the extraction/insertion procedure. Afterward, the WDM signals are individually routed to the optical multiplexer, at the OADM output, where they are combined and sent to the network.
   In a second architecture, the OADM consists of the following basic elements.
- A "Wavelength Blocker" (WB), a device able to block, in a selective and remotely controlled way, some of the components of an optical WDM comb (typically with a spacing of 0.4 and 0.8 nm) received at its input. Such device is normally very expensive, because still implemented with sophisticated technology based on liquid crystals (see "Dynamically Reconfigurable Wavelength Blocker for C or extended L band", reported on the JDSU http site:// www.jd5.com).
- A 1x2 optical splitter.
- A 1xN optical splitter.
- A 2x1 optical combiner.
- A Nx1 optical combiner.
- Tuneable optical filters, available in various technologies (thin-film, Fabri-Perot and so on).

In this solution, the WDM signals are sent to the 1x2 splitter. One of the two outputs of the splitter is connected to the input of the 1xN splitter (the "N" outputs of the splitter 1xN are connected to the inputs of N tuneable filters); the other is connected to the input of the WB. N signals, each of them with a different wavelength, are therefore available at the "N" filtered outputs of the splitter. These N signals, passing through a WB, can be individually blocked and replaced with other inserted signals. Normally, these signals are added by delivering the output of the WB and the output of an Nx1 combiner to the two inputs of a 2x1 combiner. The output of the 2x1 combiner is then routed to the egress port fibre.
In a third architecture, combination of tuneable filters, 2x2 optical switches, star-couplers and wavelengths converters (see Alcatel patent n. WO 98/ 18231) are generally employed.

The first one of the three solutions mentioned above is a low cost scalable structure, with good optical transmission performances achieved with the optical noise filtering of the demultiplexing/multiplexing devices.

However, this structure when implemented with AWG is anyway able to manage only optical-carriers with fixed and contiguous wavelengths and, therefore, don't allow a suitable dynamic management of wavelengths included in the ITU-T standards. Improvements are achievable by the use of selectable demultiplexing/multiplexing modules with integrated extraction/insertion capability. They become very attractive for their configurability but nevertheless don't cover all functions normally required for an OADM (for example, see Santec product TWDM-700/ 700AD, "WDM tuneable module").
In this architecture, the OADM consists of a "mirror-like" structure with multiplexing and demultiplexing devices placed at both of its ends.
Such "mirror-like" structure, even if provided of selectable demultiplexing/multiplexing modules, entails a redundancy having a very negative impact in terms of transmission loss, reconfiguration speed and overall cost.

The second solution, thanks to the WB, offers optical transparency and flexibility but is very expensive and not very suitable for an economic transition from a small to a large range of wavelengths. In fact, in such a device, the blocking function of the different carriers cannot be gradually increased according to the number of managed wavelengths, because the blocking capability of the WB is rigorously fixed in terms of wavelength range and spacing. Moreover, due to the absence of optical filtering elements, the OADM based on WB is vulnerable to the noise propagation.
In the third case (see Alcatel's patent n. WO 98/ 18231), excellent performances in terms of reconfigurability and noise filtering are obtained at the expense of an evident architecture complexity and high quality and expensive optical components.

So, in this respect, Alcatel's structure shows a redundancy which is not required and more of all not sustainable, in the case of a metro OADM.

Additionally, the presence of passive elements as the "star-couplers" makes it not very scalable.

Another Alcatel patent numbered US 5,612,805 discloses an add-drop optical spectrum-division multiplexer for dropping a drop multiplex from an incoming multiplex signal and for adding an add multiplex into an outgoing multiplex signal. The multiplexer includes a demultiplexing device for separating a number of optical carriers from the incoming multiplex signal and for selecting drop carriers which constitute the drop multiplex as well as through carriers which are to be output as the outgoing multiplex signal. The multiplexer further includes an apparatus for selecting a certain number of add carriers from the total number of carriers of the multiplex, and a coupling device and wavelength converter for allocating fixed wavelengths to the signals which modulate the through carriers and the add carriers. Thanks to several single-channel tunable optical filters and wavelength converters, the multiplexer is capable to manage a lot of wavelengths independently of their allocation to the inputs or the outputs.

Despite its capability, the multiplexer of this latter citation is unsuitable to manage incoming signals constituted by a subset of contiguous wavelengths. In fact, only one-wavelength optical filters are used with multiplicity of N, but in this case sub-band scalability is not immediate.

### Object of the Invention

There is the **necessity** of an alternative solution able to offer scalability, reconfigurability, quality of transmission performances, and easy channel management.

### Summary of invention

The Invention claimed in the independent claim represents the right answer to all these requirements.

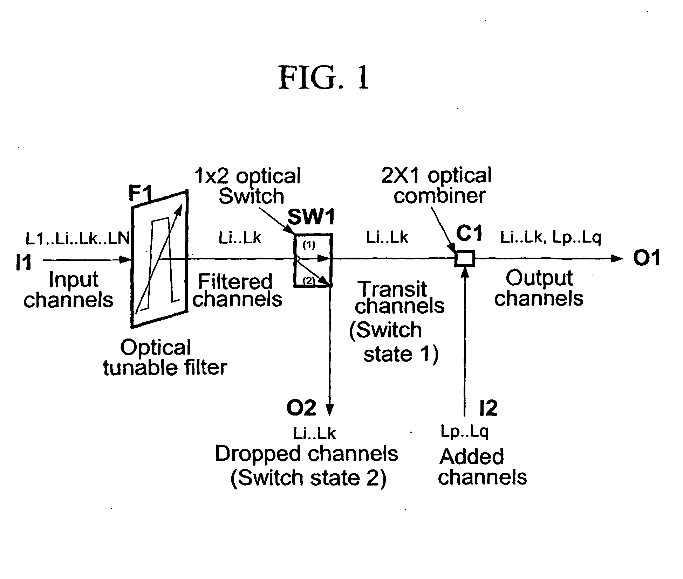

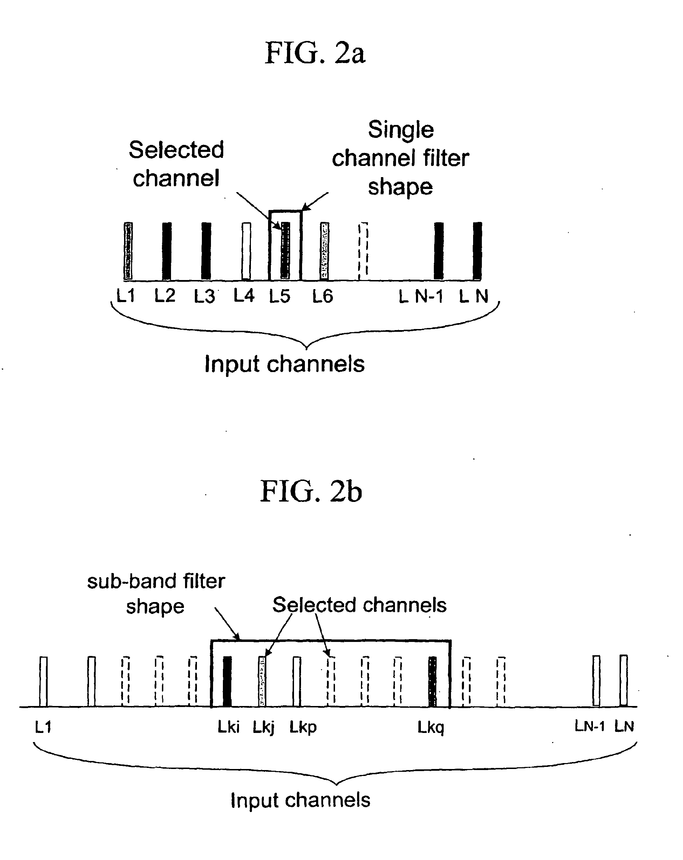

The block in figure 1, named "Filtered Tunable Switch" **(FTS),** is at the basis of the suggested OADM. It consists of only three fundamental elements:
- An optical wavelength tunable filter **(F1),** with a characteristic transmission function, fixed "ab initio", according to the following classes:
   - Filter able to select a single optical carrier of any wavelength within the ITU-T grid (Racc. G.692) in the third optical window band (1480-1620 nm); its filtering shape is shown in figure 2a.
   - Filter able to select a contiguous optical wavelengths comb, with an equal spacing that, typically, can be between 0.2 nm and 1.6 nm, according to the ITU-T grid (Recc.G.692); filtering shape in figure 2b.
- A 1x2 optical switch **(SW1),** with one input and two outputs so that, through the application of a voltage control signal, the input signal can be routed to one of the two outputs.
- A 2x1 optical combiner **(C1),** with two inputs and one output, able to combine the input signals and route them to the output.

In such structure, the filtering element allows to select either a subset of equally spaced wavelengths or a single wavelength as well. With the switch **SW1** in the state (2), the selected subset of carriers is extracted from the output **O2;** with the switch **SW1** in the state (1), the selected subset of carriers passes through and is delivered to one of the inputs of the combiner **C1**.

A further subset of optical carriers, coming from **I2**, is inserted in the remaining input of the **C1** combiner.

The signal coming out on the output **01** of the combiner **C1** will be the combination of the two sets.

The filter **F1** and the switch **SW1** will be controlled through a control unit, which could be the same control unit of the OADM.
Such structure, made up only of the three elements F1, **SW1** and **C1** mentioned above, has the properties of selective filtering, extraction or transit of the required carriers and, finally, insertion of any new optical carriers.

The capability to select, through an external control signal, the tunable filter bandwidth, allows to extract without any limitations, on the output **O2,** any of the channels contained in the input **I1,** and allows to insert the channels contained in the input **I2,** on the output **O1** avoiding carrier overlapping.

The absence of filtering components at the output **O1** allows to insert, across **I2**, any optical carrier that can replace those ones extracted from **02** or add on those (with different wavelengths) coming through the switch **SW1** in position (1).

The module allows, via the input **I2,** to substitute, at the output **O1,** the channels taken out at the output **O2,** according to the required functionality, or allows to inset new channels, without any limitation.

Since photonic technology makes various filtering shapes possible, the FTS structure can be useful used to realize several and more complex OADM architectures, having better performances in terms of configurability, scalability and transmission.

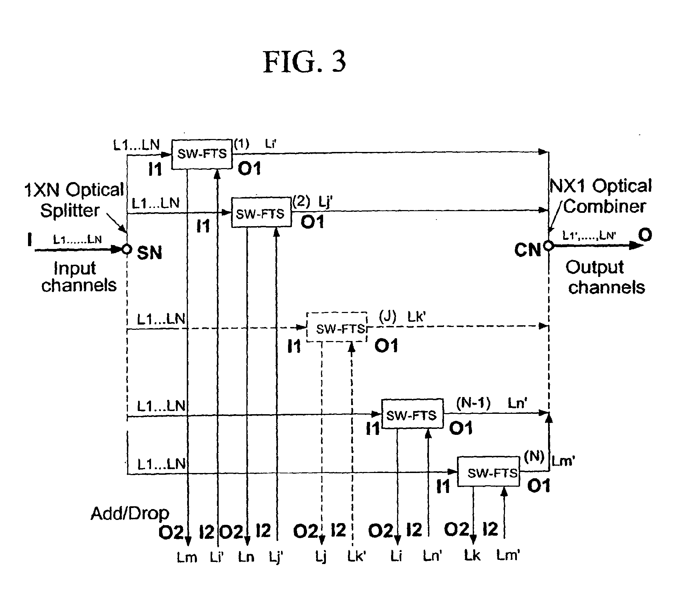

Figure 3. shows a first implementation of a scalable and reconfigurable N- carriers OADM structure based on the module **FTS.**

The OADM consists of N basic blocks **FTS,** where the tunable filter is able to select only one among all optical carriers at the inputs **I1.**

In this case, the filter belongs to the first class reported above and, for simplicity of notation, the basic block **FTS** is named **SW-FTS "Single Wavelength- Filtered Tunable Switch".**

The N channels input signal **(I)** is routed to a 1xN splitter **(SN),** or to an equivalent combination of splitters. The input **I1** of each of the N blocks **SW-FTS** is connected to one of the **N** outputs of the splitter **SN**. In this way, the input **I1** of every block **SW-FTS** receives all the components contained in the input signal **I** and, thanks to the tuning properties of the filter **F1,** each module **SW-FTS** can select any of them.

The selected component can be extracted on the output **O2** of the module or combined with the signal inserted through the input **I2** and reappeared at the **SW-FTS** output **O1**.

The output **O1** of all the modules **SW-FTS** are connected to the N inputs of an Nx1 optical combiner (**CN**), or to an equivalent combination of combiners, so that both the "passing-through" carriers together with the "added" carriers can be recombined at the output **O** of the combiner, making up a new plurality of signals at the egress of the OADM .

In this structure, the input filtering function minimizes the noise introduced by any intermediate amplifying element (Amplified Spontaneous Emission) inserted for compensating the optical power losses, and any non-linear effect (crosstalk, Four Waves Mixing, ...) due to the switches, the optical fiber, and so on.

Furthermore, the capabilities to select any carrier at the input of each module and to add some new ones allows to extract, route and insert any optical channel with the maximum flexibility. In other terms:
- any carrier at the input **I**, distributed through the splitter **SN** to the inputs **I1,** can be extracted from any output **O2**, or can be routed to any port **O1,**
- a new carrier can be inserted from any channel port **I2**, making up a new plurality of signals at the output **O** of the combiner **CN**.

This last option is particularly useful when, at the inputs **I2,** transmitters equipped with tunable lasers are placed.

Nowadays, these tunable sources allow selecting, through a digital control signal, any wavelength chosen among a group of n (8) spaced of 0.4 nm.

A tunable source placed in one of input channel 12 can insert in the OADM any wavelength belonging to its tunable range, in such a way that wavelength overlapping is avoided. This is achieved by choosing the wavelength to be inserted on the input **I2** of a given module **SW-FTS** among those extracted through one of the channel ports **O2** or already left empty in the WDM signal entering the OADM.

The reconfigurability of the **FTS** based OADM is comparable with that one of the device reported in the ALCATEL patent n. WO98/18231, but is obtained through a substantial reduction of the number of devices and with an evident simplification of the making architecture as well. The simplicity of the architecture is a fundamental parameter when a metropolitan application is considered.

Other features of the OADM object of the present invention are the scalability and the optical transparency.

As regards the scalability (see Fig. 3), the number of the **SW-TFS** blocks is strictly based on the number of the carriers used in the optical network.

As far as the transparency, this is strictly related to the filtering properties of the **FTS** modules. Nowadays, optical filter implementation is of the same complexity for signals at 2.5, 10 and 40 Gb/s and 0.4, 0.8 and 1.6 nm spacing. When we move into the 0.2 nm spacing, Fabry-Perot filtering structures must be taken into consideration, and these are still quite expensive.

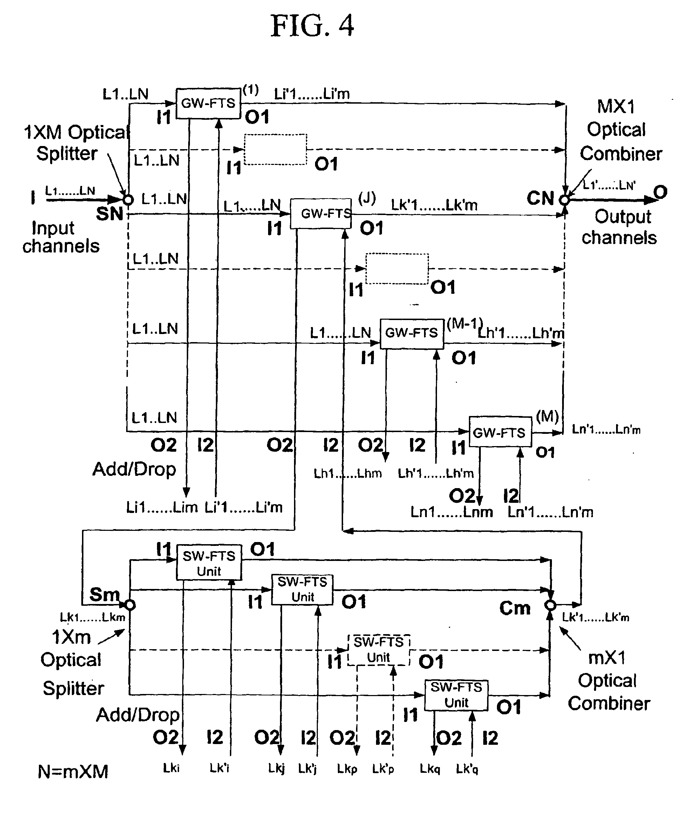

In order to get than a scalable and cheap version of the above solution, particularly useful where a large amount of traffic increase requires more wavelengths to be managed in respect to those extracted/inserted per single node, the OADM of figure 4 can be used.

The whole plurality of wavelengths delivered to the input **I** of the OADM is splitted in **"m"** generic sub-bands of contiguous carriers, each of them can pass through, be extracted or inserted.

For each sub-band, this function is managed by a **GW-FTS** block ("Grouped Wavelengths-Filtered Tunable Switch"), equipped with a wide-band tunable filter (see the second of the three typology mentioned before).

The single carriers, selected by each sub-band, can be fully managed by connecting the **O2** extraction output of each **GW-FTS** module to the input of a 1xm splitter (**Sm**), or of an equivalent combination of splitters, and delivering the **m** outputs of the splitter to the **m** inputs **I1** of **m SW-FTS** modules, organized in the same structure as shown in figure 3.

The output **O1** of each of the **SW-FTS** modules is connected to one of the **m** inputs of the **Cm** combiner, or of an equivalent combination of combiners. The output of the **Cm** combiner is connected to the input **I2** of the **GW-FTS** module.

In this way the OADM is capable to select and manage one or more **"m** wavelengths" sub-bands with the maximum flexibility.

In the simplest implementation of this architecture, every sub-band coincides with the range of the tunable laser feeding the input **I2**.
As mentioned above, for an 0.4 nm spacing, this range can span over 8 different wavelengths, and in case of a 10 Gb/s system, a sub-band of 80 Gb/s can be flexible managed .

In conclusion, the two fundamental filtering typologies previously described make the **FTS** module, object of the present invention, particularly suitable for flexible and scalable architectures, in which costs and complexity can be optimized according to the requirements that, generally, in the metro-networks are quite heterogeneous.

### Brief description of the drawings.

Further advantages, characteristics and conditions of use will be apparent from the more particular description of exemplary embodiment, which is shown as an example but and without introducing any limitation, as illustrated in appended drawings, were:
**Figure 1** shows a block diagram of a Filtered Tunable Switch block
**Figure 2a** describes the characteristic of a tunable single channel optical filter
**Figure 2b** describes the characteristic of a tunable multi-channel optical filter capable to select a band of contiguous optical carriers
**Figure 3** describes the block diagram of an N channel OADM realized with N blocks **SW-FTS**
**Figure 4** describes the block diagram of an **N** channel OADM realized with a combination of **M** blocks **WG-FTS** and **m** blocks **SW-FTS** according to the invention.

### Description of a preferred embodiment relating to the invention

The embodiment illustrated in the figures and described hereafter, refers to the OADM architecture that's the object of the invention.

Referring to the figures and, in detail, to the Figure 1, the reference OADM device consists of N identical blocks, named "Filtered Tunable Switch" (**FTS**), each of them made of **only three fundamental elements**:
- An optical wavelength tunable filter **(F1),** able to select (by **remote control**) a single optical carrier of any wavelength within the ITU-T grid (Racc. G.692) in the third optical window band (1480-1620 nm);
- A 1x2 optical switch (**SW1**), with one input and two outputs so that, through the application of a control signal, the input signal can be routed to one of the two outputs.
- A 2x1 optical combiner **(C1),** with two inputs and one output, able to combine the input signals and route them to the output.

The filter **F1** and the switch **SW1** will be controlled through a control unit, which could be the same control unit of the OADM.

By means of an external control signal, each filtering element allows to select any channel among those contained in the input signal **I1.**

When the switch **SW1** is set in position (1), the selected channel is delivered to the **C1** combiner while, when set in position (2), the selected channel is extracted through the port output **O2**.

New optical carriers, through the input **I2**, can be inserted in the remaining input of the **C1** combiner.

The signal coming out of the output **O1** of the combiner **C1** will be the combination of the two sets.

The absence of filtering components at the output **O1** allows to insert, through the input **I2**, any optical carrier either in substitution of those extracted from **O2** or in addition to those coming through the switch **SW1** in position (1).

The N-channels input signal **(I)** is routed to an 1xN splitter (**SN**), or to an equivalent combination of splitters. The input **I1** of each of the N blocks **SW-FTS** is connected to one of the N outputs of the splitter SN. In this way, the input **I1** of every block **SW-FTS** receives all the components contained in the input signal **I** and, thanks to the tuning properties of the filter **F1,** each module **SW-FTS** can select any of them. The selected component can be extracted on the output **O2** or, combined with the signal inserted through the input **I2,** reappear at the **SW-FTS** output **O1.**

The outputs **O1** of all the modules **SW-FTS** are connected to the **N** inputs of an Nx1 optical combiner **(CN),** or to an equivalent combination of combiners, where the "passing-through" carriers together with the "added" carriers are recombined and presented at the egress **O** of the OADM**.**

The possibility to select any carrier at the input of each module, and to add some new ones, allows to extract, route and insert any optical channel with the maximum flexibility.

In other terms:
- any wavelength component at the input **I**, distributed by the splitter **SN** to the inputs **I1** of all the **SW-FTS** modules, can consequently be extracted from any output **O2,** or be routed to any port **O1,**
- a new carrier can be inserted through any input channel port **I2,** and included in the new plurality of signals constituted by the WDM signal coming out of the output **O** of the OADM**.**

Therefore, while a particular embodiment referring to the present invention has been shown and described, it should be understood that the present invention is not limited thereto since other embodiments may be made by those skilled in the art without departing from the scope thereof. One of these variants could be the N combiners C1 in each of the block SW-FTS and the combiner CN are replaced with a single 2Nx1 combiner, at the output of the OADM. In this case, the N outputs of the N blocks SW-FTS and the N inputs Ilas well should be connected to the 2N inputs of the 2Nx1 combiner.

It is thus contemplated that the present invention encompasses any and all such embodiments covered by the following claims.

## Claims

1. Optical Add Drop Multiplexer device for the transit and the extraction of a plurality of N optical signals each one of them associated to a carrier having a different wavelength and for the introduction of a further plurality of optical signals; this device being **characterized in that** it includes:
- a first optical power splitter (SN) adapted to receive the N carriers input signal **I**, and adapted to deliver it to m equal power outputs, each of them containing all N input carriers;
- m first optical devices (GW-FTS), each single device being connected to one of the m equal power outputs, each device including a first tunable optical filter for allowing a selected subset of **q** contiguous and equally spaced carriers from said N input carriers either to transit or to be extracted, and each device being adapted to insert a further plurality of **q** optical signals;
- a first optical combiner **(CN)** with **m** inputs, each input connected to the output of one of the **m** first optical devices(GW-FTS), the combiner being adapted to deliver to its output all carriers contained in its **m** inputs;
- m second optical power splitters (Sm), each connected to one of said **m** first optical devices (GW-FTS) for receiving the extracted subset of q carriers and split it to **q** equal-power outputs each output including the whole subset;
- up to **q** second optical devices (SW-FTS Unit) for each one of the **m** second optical power splitters (Sm), each said second optical device being connected to one of the q equal-power outputs and including a second tunable optical filter for allowing one of q optical carriers either to transit or to be extracted, and each second optical device being adapted to perform the insertion of a further optical signal;
- m second optical combiners (Cm) with q inputs, each single combiner being adapted to receive at each input one of the q outputs coming from the q second optical devices (SW-FTS Unit), and to deliver to its output all carriers contained in its q inputs for constituting a plurality of q optical signals delivered to one of said m first optical devices (GW-FTS) in order to be inserted .

2. The Optical Add Drop Multiplexer device of claim 1, **characterized in that** each first optical device (GW-FTS) further includes:
- a 1x2 optical switch able to receive the subset of carriers at different wavelength selected by the tunable filter and route this subset of carriers at different wavelength to a receiving optical unit or to a 2x1 optical combiner;
- a 2x1 optical combiner able to deliver to its output both said first set of carriers at different wavelength coming from the optical switch and a possible second set of carriers at different wavelength received from a transmitting optical element.

3. The Optical Add Drop Multiplexer device of claim 1 or 2, **characterized in that** each second optical device (SW-FTS Unit) includes:
- a 1x2 optical switch (SW1) able to receive the carrier selected by the tunable filter (F1) and route this carrier to a receiving optical unit or to a 2x1 optical combiner (C1);
- a 2x1 optical combiner (C1) able to deliver to its output both the carrier coming from the optical switch (SW1) and a possible second carrier at different wavelength received from a transmitting optical element.

## Patentansprüche

1. Optische Add/Drop-Multiplexer-Vorrichtung für die Durchleitung und das Auskoppeln einer Mehrzahl von N optischen Signalen, von denen jedes einem optischen Träger mit einer jeweils anderen Wellenlänge zugeordnet ist, sowie zum Einkoppeln einer weiteren Mehrzahl von optischen Signalen; wobei diese Vorrichtung **dadurch gekennzeichnet ist, dass** sie Folgendes umfasst:
- einen ersten optischen Signalteiler (SN), der dafür ausgelegt ist, das Eingangssignal I mit N Trägern aufzunehmen, und der dafür ausgelegt ist, dieses Signal an m Ausgänge gleicher Leistung zu übergeben, die jeweils alle N Eingangsträger beinhalten;
- m erste optische Vorrichtungen (GW-FTS), wobei jede einzelne dieser Vorrichtungen mit einem der m Ausgänge gleicher Leistung verbunden ist, und wobei jede Vorrichtung ein erstes regelbares optisches Filter umfasst, das es erlaubt, eine selektierte Teilmenge von q benachbarten Trägern mit gleichem Abstand zueinander aus den besagten N Eingangsträgern entweder durchzuleiten oder auszukoppeln, wobei jede Vorrichtung dafür ausgelegt ist, eine weitere Mehrzahl von q optischen Signalen einzukoppeln;
- einen ersten optischen Signalkoppler (CN) mit m Eingängen, wobei jeder Eingang mit dem Ausgang einer der m ersten optischen Vorrichtungen (GW-FTS) verbunden ist, wobei der Signalkoppler dafür ausgelegt ist, an seinen Ausgang alle Träger zu übergeben, die in seinen m Eingängen enthalten sind;
- m zweite optische Signalteiler (Sm), die jeweils mit einer der besagten m ersten optischen Vorrichtungen (GW-FTS) verbunden sind, um die ausgekoppelte Teilmenge von q Trägern aufzunehmen und auf q Ausgänge gleicher Leistung zu verteilen, wobei jeder Ausgang die gesamte Teilmenge enthält;
- bis zu q zweite optische Vorrichtungen (SW-FTS-Einheit) für jeden der m zweiten optischen Signalteiler (Sm), wobei jede der besagten zweiten optischen Vorrichtungen mit einem der q Ausgänge gleicher Leistung verbunden ist und ein zweites regelbares optisches Filter enthält, das es erlaubt, einen von q optischen Trägern entweder durchzuleiten oder auszukoppeln, und wobei jede der zweiten optischen Vorrichtungen dafür ausgelegt ist, die Einkopplung eines weiteren optischen Signals durchzuführen;
- m zweite optische Signalkoppler (Cm) mit q Eingängen, wobei jeder einzelne Signalkoppler dafür ausgelegt ist, an jedem Eingang einen von q Ausgängen aufzunehmen, die von den q zweiten optischen Vorrichtungen (SW-FTS-Einheit) kommen, und an seine Ausgänge alle Träger zu übergeben, die in seinen q Eingängen enthalten sind, um eine Mehrzahl von q optischen Signalen zu erzeugen, die an eine der besagten m ersten optischen Vorrichtungen (GW-FTS) übergeben werden, um dort eingekoppelt zu werden.

2. Optische Add/Drop-Multiplexer-Vorrichtung gemäß Anspruch 1, **dadurch gekennzeichnet, dass** jede der ersten optischen Vorrichtungen (GW-FTS) ferner Folgendes umfasst:
- eine optische 1x2-Schalteinrichtung, die in der Lage ist, die Teilmenge der Träger mit unterschiedlichen Wellenlängen, die von dem regelbaren Filter selektiert wurden, aufzunehmen und diese Teilmenge von Trägern mit unterschiedlichen Wellenlängen an eine empfangende optische Einheit oder an einen optischen 2x1-Signalkoppler weiterzuleiten;
- einen optischen 2x1-Signalkoppler, der in der Lage ist, sowohl die besagte erste Teilmenge der Träger mit unterschiedlichen Wellenlängen, die von der optischen Schalteinrichtung kommen, als auch eine eventuelle zweite Teilmenge von Trägern mit unterschiedlichen Wellenlängen, die von einem sendenden optischen Element empfangen werden, an seinen Ausgang zu übergeben.

3. Optische Add/Drop-Multiplexer-Vorrichtung gemäß Anspruch 1 oder 2, **dadurch gekennzeichnet, dass** jede der zweiten optischen Vorrichtungen (SW-FTS-Einheit) Folgendes umfasst:
- eine optische 1x2-Schalteinrichtung (SW1), die in der Lage ist, den Träger, der von dem regelbaren Filter (F1) selektiert wurde, aufzunehmen und diesen Träger an eine empfangende optische Einheit oder an einen optischen 2×1-Signalkoppler (C1) weiterzuleiten;
- einen optischen 2x1-Signalkoppler (C1), der in der Lage ist, sowohl den Träger, der von der optischen Schalteinrichtung (SW1) kommt, als auch einen eventuellen zweiten Träger mit einer anderen Wellenlänge, der von einem sendenden optischen Element empfangen wird, an seinen Ausgang zu übergeben.

## Revendications

1. Dispositif Multiplexeur Optique d'Insertion-Extraction pour l'acheminement et l'extraction d'une pluralité de N signaux optiques, chacun d'eux étant associé à une porteuse ayant une longueur d'onde différente, et pour l'introduction d'une autre pluralité de signaux optiques; ce dispositif étant **caractérisé en ce qu'**il comprend :
- un premier séparateur de puissance optique (SN) conçu pour recevoir le signal d'entrée I à N porteuses, et conçu pour le délivrer à m sorties de puissance égale, chacune d'elles contenant toutes les N porteuses d'entrée;
- m premiers dispositifs optiques (GW-FTS), chaque dispositif individuel étant relié à l'une des m sorties de puissance égale, chaque dispositif comprenant un premier filtre optique accordable pour permettre à un sous-ensemble sélectionné de q porteuses contiguës et espacées de manière égale en provenance desdites N porteuses d'entrée soit d'être transmises, soit d'être extraites, et chaque dispositif étant concu pour insérer une autre pluralité de q signaux optiques;
- un premier combinateur optique (CN) comportant m entrées, chaque entrée étant reliée à la sortie de l'un des m premiers dispositifs optiques (GW-FTS), le combinateur étant conçu pour délivrer à sa sortie toutes les porteuses contenues dans ses m entrées;
- m seconds séparateurs de puissance optique (Sm), chacun étant relié à l'un desdits m premiers dispositifs optiques (GW- FTS) pour recevoir le sous-ensemble extrait des q porteuses et le séparer en q sorties de puissance égale, chaque sortie comprenant tout le sous-ensemble;
- jusqu'à q seconds dispositifs optiques (unité SW-FTS) pour chacun des m seconds séparateurs de puissance optique (Sm), chaque dit second dispositif optique étant relié à l'une des q sorties de puissance égale et comprenant un second filtre optique accordable pour permettre à l'une des q porteuses optiques soit d'être transmise, soit d'être extraite, et chaque second dispositif optique étant conçu pour effectuer l'insertion d'un autre signal optique;
- m seconds combinateurs optiques (Cm) comportant q entrées, chaque combinateur individuel étant conçu pour recevoir à chaque entrée l'une des q sorties provenant des q seconds dispositifs optiques (Unité SW-FTS), et pour délivrer à sa sortie toutes les porteuses contenues dans ses q entrées pour constituer une pluralité de q signaux optiques délivrés à l'un desdits m premiers dispositifs optiques (GW-FTS) pour qu'ils soient insérés.

2. Dispositif Multiplexeur Optique d'Insertion-Extraction selon la revendication 1, **caractérisé en ce que** chaque premier dispositif optique (GW-FTS) comprend en outre :
- un commutateur optique 1 x 2 capable de recevoir le sous-ensemble de porteuses à une longueur d'onde différente sélectionné par le filtre accordable et d'acheminer ce sous-ensemble de porteuses à une longueur d'onde différente vers une unité optique de réception ou vers un combinateur optique 2 x 1;
- un combinateur optique 2 x 1 capable de délivrer à sa sortie à la fois ledit premier ensemble de porteuses à une longueur d'onde différente provenant du commutateur optique et un second ensemble possible de porteuses à une longueur d'onde différente reçu d'un élément optique émetteur.

3. Dispositif Multiplexeur Optique d'Insertion-Extraction selon la revendication 1 ou 2, **caractérisé en ce que** chaque second dispositif optique (Unité SW-FTS) comprend :
- un commutateur optique 1 x 2 (SW1) capable de recevoir la porteuse sélectionnée par le filtre accordable (F1) et d'acheminer cette porteuse vers une unité optique de réception ou vers un combinateur optique 2 x 1 (C1);
- un combinateur optique 2 x 1 (C1) capable de délivrer à sa sortie à la fois la porteuse provenant du commutateur optique (SW1) et une seconde porteuse possible à une longueur d'onde différente recue d'un élément optique émetteur.
